# EUROPEAN PATENT APPLICATION

(11) **EP 4 759 464 A1**
(43) Date of publication of application: **17.06.2026**
(21) Application number: 24879797.9
(22) Date of filing: 17.10.2024
(51) Int. Cl.: B23G 1/04, B23B 1/00, B23Q 15/013, G05B 19/4093

(54) **MACHINE TOOL**

(30) Priority: 17.10.2023 JP 2023178806; 23.10.2023 JP 2023181721; 28.03.2024 JP 2024053574
(71) Applicant: DMG Mori Co., Ltd., Yamatokoriyama-shi, Nara 639-1160 (JP)
(72) Inventor: KODA, Yorihito, Yamatokoriyama-shi, Nara 639-1160 (JP)
(74) Representative: Isarpatent
(86) International application number: PCT/JP2024/037074
(87) International publication number: WO 2025/084376

(57) **Abstract**

The present disclosure relates to a screw machining method and a machine tool capable of screw machining.

## Description

### Technical Field

The technical field of the present application relates to a screw machining method and a machine tool capable of screw machining.

### Background Art

In general, a machine tool that performs turning processes shapes a workpiece into a predetermined shape by feeding or moving a cutting tool and the workpiece relative to each other along the rotational axis of the workpiece while rotating the cutting tool and the workpiece relative to each other in the circumferential direction of the workpiece. In this type of machining, long, continuous chips may be produced. Such long, continuous chips tend to remain inside a machining chamber, entailing regular chip removal. This increases the time required before starting the machining of the workpiece. Furthermore, long chips remaining inside the machining chamber, if any, can damage the workpiece or some components.

To deal with such issues, a machine tool disclosed in Patent Literature (PTL) 1 induces vibration during a turning process in order to break up chips.

### Citation List

### Patent Literature

PTL 1: Specification of U.S. Patent No. 10610993 (Japanese Patent No. 6914840)

### Summary of Invention

### Technical Problem

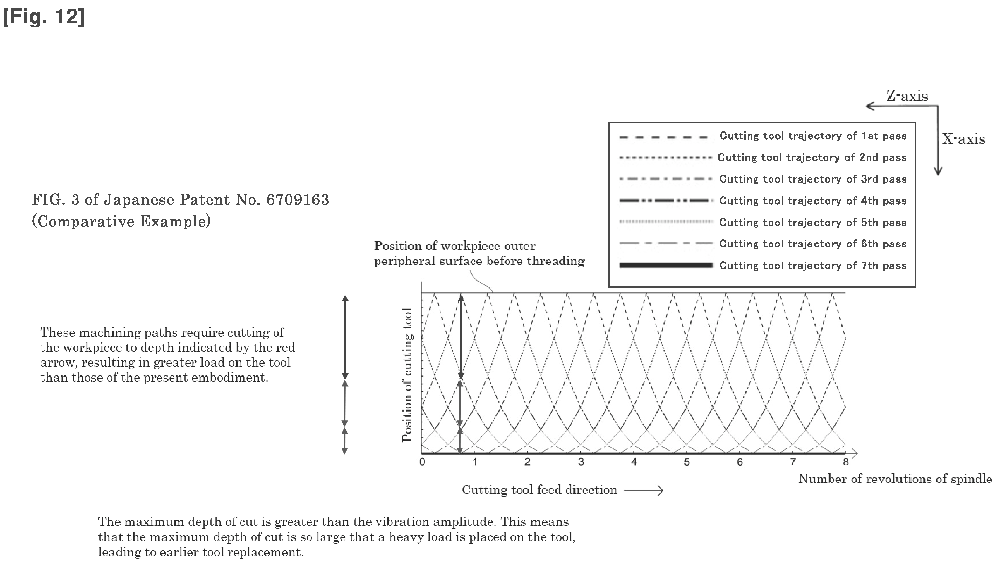

However, in the case of the machining method disclosed in PTL 1, the vibration places a heavy load on the tool, leading to a higher frequency of tool replacement, as shown in FIG. 12. Solution to Problem

The present disclosure therefore provides machining paths, a machining method, a machine tool, and the like related to screw machining that allow for a reduction in load on tools.

### Brief Description of Drawings

[FIG. 1] FIG. 1 is an explanatory diagram for illustrating an example of a general configuration of a machine tool.
[FIG. 2] FIG. 2 is a block diagram illustrating a configuration of the machine tool.
[FIG. 3] FIG. 3 is an exemplary diagram showing movement trajectories of a machining point of a tool with respect to Z-axis position change.
[FIG. 4] FIG. 4 is an exemplary diagram showing movement trajectories of the machining point of the tool with respect to Z-axis position change.
[FIG. 5] FIG. 5 is an exemplary diagram showing movement trajectories of the machining point of the tool with respect to Z-axis position change.
[FIG. 6] FIG. 6 is an exemplary diagram showing movement trajectories of the machining point of the tool with respect to Z-axis position change.
[FIG. 7] FIG. 7 is an exemplary diagram showing movement trajectories of the machining point of the tool with respect to Z-axis position change.
[FIG. 8] FIG. 8 is an exemplary diagram showing movement trajectories of the machining point of the tool with respect to Z-axis position change.
[FIG. 9] FIG. 9 is an exemplary diagram showing movement trajectories of the machining point of the tool with respect to Z-axis position change.
[FIG. 10] FIG. 10 is an explanatory diagram showing an input screen that is displayed on a display unit of an operation panel by a programming unit.
[FIG. 11] FIG. 11 is an explanatory diagram showing an example of an NC program that is created by the programming unit.
[FIG. 12] FIG. 12 is a diagram illustrating a conventional machining method.

### Description of Embodiments

### (Machine Tool)

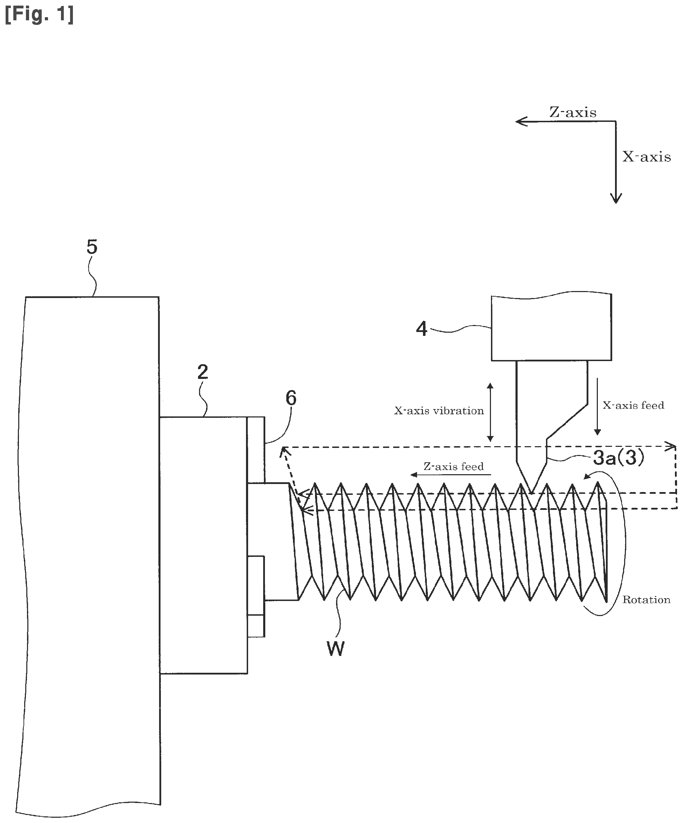

FIG. 1 is a schematic diagram illustrating main components of a machine tool 1. The machine tool 1 is an NC lathe that performs a turning process by bringing a cutting tool 3 into contact with a workpiece W while rotating the workpiece W. Examples of machining include outer diameter machining, inner diameter machining, drilling, profiling taper turning, grooving, facing, and threading. FIG. 1 shows a machine tool executing threading among the aforementioned machining operations that the machine tool is capable of executing. During the execution of threading, the machine tool 1 moves the workpiece W and the cutting tool 3 relative to each other on the Z-axis, and vibrates the cutting tool 3 in the radial direction of the workpiece W based on program codes.

In the following description, the Z-axis is defined as the rotational axis of the workpiece W, the X-axis is defined as the vertical direction orthogonal to the Z- axis, and the Y-axis is defined as a direction orthogonal to both the X-axis and the Z-axis (direction perpendicular to the plane of FIG. 1). In FIG. 1, the radial direction of the workpiece W is parallel to the X-axis.

In the configuration in which vibration is introduced into threading, it is preferable to vibrate a tool 3a or the workpiece in a direction parallel to the X-axis. However, the machine tool 1 is not limited as such, and may vibrate the tool 3a or the workpiece in a direction parallel to the Y-axis or in a direction including an X-axis component and a Y-axis component. In the configuration in which vibration is introduced into threading, furthermore, it is preferable to vibrate the tool 3a or the workpiece in the radial direction of the workpiece W. However, there are no specific limitations, provided the vibration is in a direction including a radial vibration component. For example, in FIG. 1, the machine tool 1 may vibrate the tool 3a or the workpiece in a direction including an X-axis component and a Z-axis component.

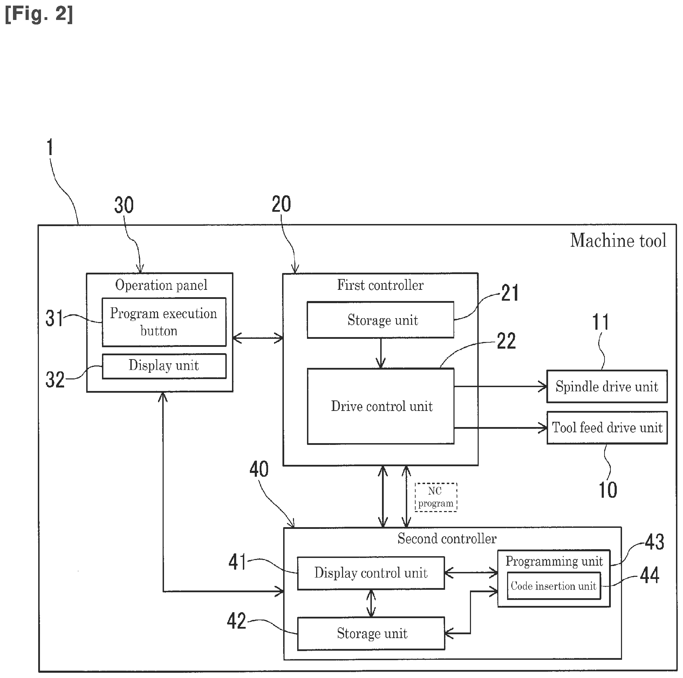

The machine tool 1 includes a spindle 2 (example of what is referred to as a workpiece holding unit) having a chuck mechanism 6 at a distal end thereof, a headstock 5 that rotatably holds the spindle 2, the cutting tool 3, and a tool holding unit 4 (for example, a tool rest, a tool spindle) that holds the cutting tool 3 so that the cutting tool 3 is movable along the X-axis, the Y-axis, and the Z-axis. The headstock 5 contains a spindle drive unit 11 (FIG. 2) that drives and rotates the spindle 2, and is fixed onto a bed of the machine tool 1. The spindle drive unit 11 (FIG. 2) includes, for example, a servomotor. The spindle drive unit 11 functions as a rotational drive unit that rotates the cutting tool 3 and the workpiece W relative to each other in the circumferential direction of the workpiece W. In the present embodiment, machining is performed using an existing drive unit for the workpiece holding unit and an existing drive unit for the tool holding unit, without providing the machine tool with an additional vibration mechanism for inducing vibration. That is, the machine tool 1 performs machining while moving the workpiece holding unit and the tool holding unit relative to each other with movement for vibration superimposed thereon by controlling the existing drive unit for the workpiece holding unit and the existing drive unit for the tool holding unit.

In the case of machining according to PTL 1, the amplitude of the vibration is so large that the vibration propagates to the machine tool itself. Since using the machine tool as is leads to a decrease in screw machining quality, the machine tool is mechanically reinforced to prevent the propagation of vibration. Alternatively, a separate vibration mechanism that does not allow vibration to propagate is attached to the machine tool. In the case of the machining method according to the present embodiment, machining can be performed without the need to attach an additional vibration mechanism.

The cutting tool 3 shown in FIG. 1 is a general-purpose tool 3a for lathes. FIG. 1 shows an example of the tool 3a being held by the tool holding unit 4.

The tool holding unit 4 is driven in each axial direction by a tool feed drive unit 10 (FIG. 2). The tool feed drive unit 10 has an X-axis feed mechanism, a Y-axis feed mechanism, and a Z-axis feed mechanism that are responsible for feed motions along the X-axis, the Y-axis, and the Z-axis. Each of the feed mechanisms includes, for example, a combination of a ball screw and a servomotor.

### (Configurations of Machine Tool and Peripheral Device)

As shown in FIG. 2, the machine tool 1 includes a first controller 20 that controls the movement of the tool 3a and the workpiece W. The first controller 20 includes a storage unit 21 that stores a program and the like for executing (interpreting) an NC program, and transmitting drive signals to the spindle drive unit 11 and the tool feed drive unit 10, and a drive control unit 22 that has an OS and the like for enabling the program to function. In the machine tool 1, the spindle drive unit 11 and the tool feed drive unit 10 move the workpiece W and the tool 3a upon receiving signals from the first controller 20.

The drive control unit 22 of the first controller 20 executes (analyzes) the NC program stored in the storage unit 21 to create a motion command from operation codes in the NC program, and drives the spindle drive unit 11 and the tool feed drive unit 10 based on the motion command. The drive control unit 22 is a functional unit that reads and executes the NC program stored in the storage unit 21. The drive control unit 22 recognizes (analyzes) written NC codes and performs drive control based on a described program while reading the NC program in sequence. If the recognized NC codes are related to the rotation control of the spindle 2, the drive control unit 22 transmits control signals corresponding thereto to the spindle drive unit 11. If the recognized NC codes are related to the feed control of the tool holding unit 4, the drive control unit 22 transmits control signals corresponding thereto to the tool feed drive unit 10.

The spindle drive unit 11 controls the rotation, that is, the rotation speed and the rotation direction (forward or reverse), for example, of the spindle 2 in accordance with the control signals transmitted from the drive control unit 22.

Similarly, the tool feed drive unit 10 controls operation of the tool holding unit 4 in accordance with the control signals transmitted from the drive control unit 22. For example, the tool feed drive unit 10 controls the rate (feed rate) at which the tool 3a is moved (rate control) and the position of a cutting edge of the tool 3a during movement (position control).

The storage unit 21 may store, for example, an NC program itself with a command "G985 A10. 10.5 K1.0" inserted as a code commanding threading according to the present embodiment. The storage unit 21 may also store a parameter for, when the NC program with the threading command inserted is executed, performing a control to introduce no vibration (for example, to set the vibration amplitude to 0) for a movement path even if vibration introduction is enabled for the movement path in the NC program. The first controller may be configured to execute blocks of the NC program in sequence while checking the values of parameters stored in the storage unit 21.

The first controller 20 implements the drive control function and the storage function described above by performing processing through an arithmetic means, such as a CPU or an LSI.

The machine tool 1 further includes a second controller 40 that controls display of a display unit 32 of an operation panel. The second controller 40 includes a storage unit 42 that stores programs and the like for controlling the display on a screen of the operation panel 30, a display control unit 41 that has an OS and the like for enabling the programs to function, and a programming unit 43 that creates an NC program.

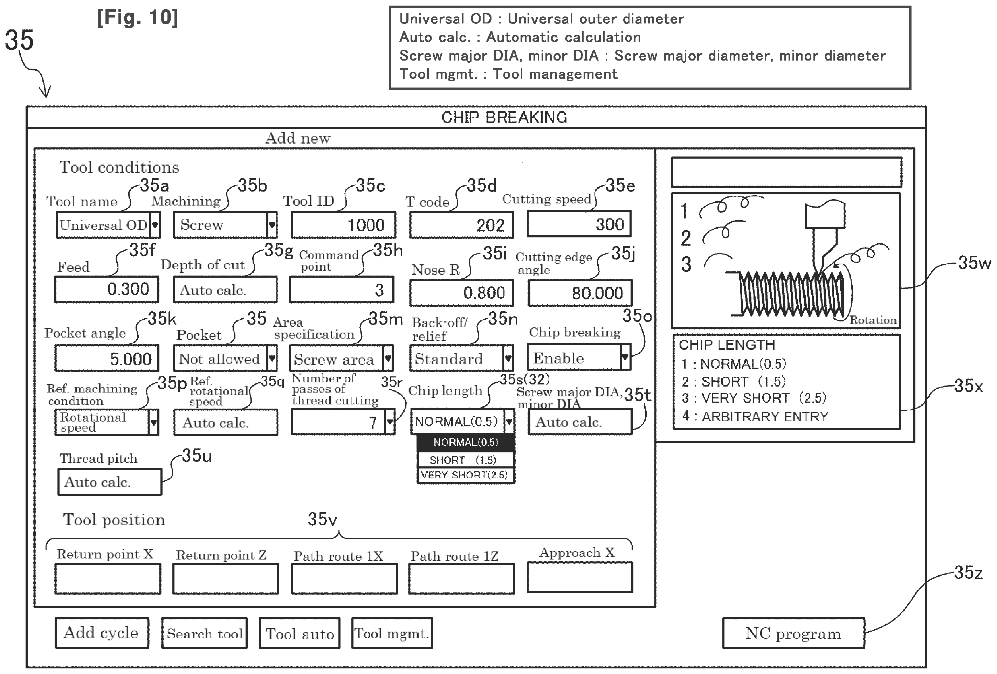

The storage unit 42 of the second controller 40 stores, for example, a program for assisting in the NC program creation and a program related to screen display of an input screen 35 for assisting in the NC program creation. The display control unit 41 of the second controller 40 has an OS that enables these programs to function. The display control unit 41 can assist in the NC program creation on the screen displayed on the display unit 32 while enabling the programs to function. The programming unit 43 creates an NC program based on information containing conditions and other settings made from the screen for assisting in the NC program creation. For example, the programming unit 43 can readily create an NC program for vibration-assisted thread machining according to the present embodiment by simply inserting "G985 A10. I0.5 K1.0" into an existing non-vibration-assisted thread machining NC program. Upon "Automatic calculation" being selected with respect to screw minor diameter on the display screen shown in FIG. 10, the programming unit 43 analyzes shape data of the same screw shape and an existing thread machining NC program for the same screw shape and extracts the screw minor diameter therefrom, thereby creating a new thread machining NC program including the screw minor diameter. On the other hand, upon any numerical value (for example, an X coordinate) being inputted in an input field for the screw minor diameter, the programming unit 43 creates a thread machining NC program including the X coordinate. Furthermore, an additional parameter may be included in the command format of "G985 A10. I0.5 K1.0". For example, "G985 A10. V72.2 10.5 K1.0" is obtained by additionally including the value of the screw minor diameter as "V_" in the format of the command code "G985 A10. I0.5 K1.0". In this case, "V_" is an NC code that defines whether or not to induce vibration and vibration direction. The programming unit 43 may also have a function of directly creating and editing an NC program by directly writing NC codes such as G-codes and M-codes, and a function of inserting a G-code or an M-code to a specific line or block of an NC program (code insertion unit 44).

The second controller 40 implements the storage function, the display control function, and the programming function described above by performing processing through an arithmetic means, such as a CPU or an LSI, that is different from the arithmetic means of the first controller 20.

The operation panel 30 has the display unit 32 (for example, a touch panel) that displays a program execution button 31 and a screen for displaying a program and machine tool information (for example, coordinates). An operator can make various machining-related settings, create an NC program, and perform other operations on the operation panel while checking information displayed on the display unit 32.

The drive control unit 22 starts execution of the NC program when the program execution button 31 on the operation panel 30 of the machine tool 1 is pressed. The drive control unit 22 reads the NC program stored in the storage unit 21. The drive control unit 22 then executes machining by controlling the spindle drive unit 11 and the tool feed drive unit 10 based on the NC program read.

In threading, the spindle 2 holding the workpiece W is rotated around the Z-axis through the spindle drive unit 11. The depth of cut of the tool 3a on the X-axis can be set to a predetermined value by specifying in the NC program the position on the X-axis of the tool holding unit 4 to be driven by the tool feed drive unit 10. The tool holding unit 4 in this state is driven and fed in the Z-axis direction by the tool feed drive unit 10, and thus the tool 3a is moved relative to the workpiece W on a line parallel to the rotational axis of the workpiece W.

In FIG 1, a movement path (tool path) of the cutting edge of the tool 3a is shown as dashed lines. As shown in FIG. 1, in the threading, the cutting edge of the tool 3a is positioned at a starting position (Xa, Za), moves at a predetermined cutting feed rate to an infeed position (X1, Za) for the first pass in the X-axis direction at a predetermined feed rate, moves to a position (X1, Z1) at a feed rate per revolution (mm/rev) corresponding to a thread pitch to perform threading on the workpiece W, moves to a relief position (Xa, Zb), and then returns to the starting position (Xa, Za) to complete the first pass of threading. Next, the tool 3a moves along the same path while cutting the workpiece W at a predetermined depth of cut, and performs multiple passes of threading on the workpiece W. In the present example, for example, the tool 3a performs seven passes of threading.

The tool paths of the multiple passes of threading are as follows.
a) First pass of threading (first threading)
   (Xa, Za) --> (X1, Za) --> (X1, Z1) --> (Xa, Zb) --> (Xa, Za)
b) Second pass of threading (second threading)
   (Xa, Za) --> (X2, Za) --> (X2, Z2) --> (Xa, Zb) --> (Xa, Za)
c) Third pass of threading (third threading)
   (Xa, Za) --> (X3, Za) --> (X3, Z3) --> (Xa, Zb) --> (Xa, Za)
d) Fourth pass of threading (fourth threading)
   (Xa, Za) --> (X4, Za) --> (X4, Z4) --> (Xa, Zb) --> (Xa, Za)
e) Fifth pass of threading (fifth threading)
   (Xa, Za) --> (X5, Za) --> (X5, Z5) --> (Xa, Zb) --> (Xa, Za)
f) Sixth pass of threading (sixth threading)
   (Xa, Za) --> (X6, Za) --> (X6, Z6) --> (Xa, Zb) --> (Xa, Za)
g) Seventh pass of threading (seventh threading)
   (Xa, Za) --> (X7, Za) --> (X7, Z7) --> (Xa, Zb) --> (Xa, Za)

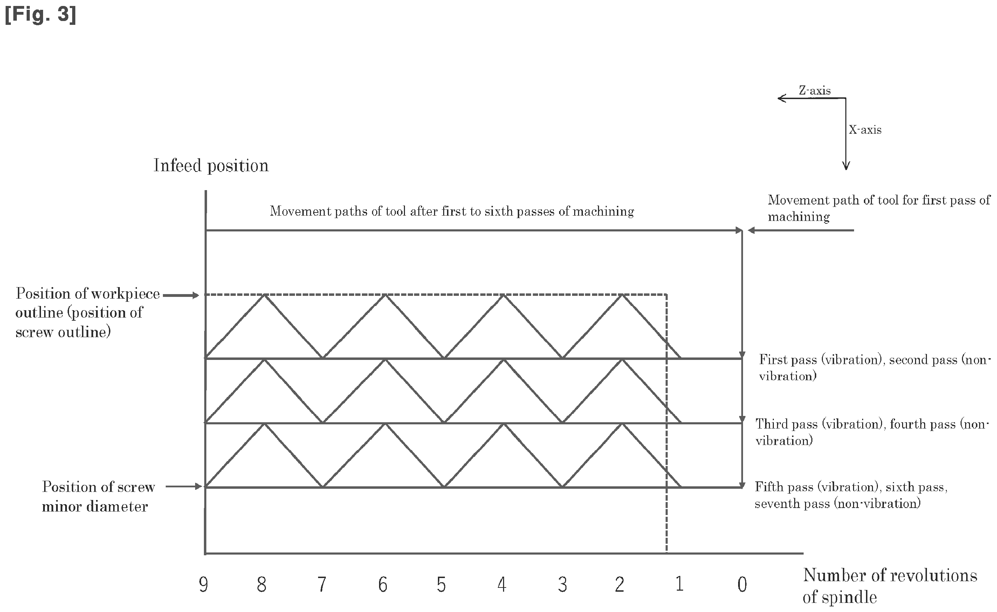

As described above, in the threading, the relative movement of the tool 3a is performed multiple times. Dotted lines in FIG. 1 represent movement trajectories of a machining point of the tool 3a. In this way, the operation of cutting thread surfaces of the screw is performed multiple times along different, non-identical cutting paths. That is, the program is not created so that the movement trajectories of the machining point are on the same cutting path. The dotted lines in FIG. 1 are straight lines and represent the movement trajectories of the machining point of the tool 3a in the conventional threading. In the case of PTL 1, a vibration component is introduced to all machining passes, giving rise to the need to set the infeed position anew. This is because PTL 1 solely focuses on preventing generation of long chips. By contrast, the present embodiment gives consideration to the load on the tool and the machine tool, and introduces a vibration component to some of the movement trajectories while introducing no vibration component to others. In a case where vibration is introduced to a linear movement trajectory like those represented by the dotted lines shown in FIG. 1, for example, a movement trajectory of vibration cutting like those of the first, third, and fifth passes of machining shown in FIG. 3 is obtained. By contrast, the second, fourth, and sixth passes of machining shown in FIG. 3 are linear cutting with no vibration component introduced. In the first and second passes of machining shown in FIG. 3, the relative movement of the tool 3a on the Z-axis begins at the same infeed position. Similarly, in the third and fourth passes of machining shown in FIG. 3, the relative movement of the tool 3a on the Z-axis begins at the same infeed position.

Again, in the conventional threading, where the thread machining section of one cycle represented by dotted lines in FIG. 1 corresponds to one pass of thread cutting, the depth of cut of the tool 3a into the workpiece W on the X-axis (in the radial direction of the workpiece) is kept constant during the execution of one pass of thread cutting (throughout the thread machining section).

By contrast, the NC program for the threading of the present embodiment is created as an NC program including a code for varying the depth of cut in the X-axis direction (the radial direction) of the tool 3a during the execution of one pass of thread cutting. In particular, the NC program preferably includes a G-code or an M-code for varying the depth of cut periodically as in the first pass, which is vibration cutting, shown in FIG. 3. Instead of a G-code or an M-code, a code obtained by combining a symbol(s) and a number(s), such as "#20240327", or a function name, such as "vibration frequency" or "frequency", may be included as a vibration-related code.

### (NC Program)

The following describes an overview of the creation of an NC program including a vibration-related code. Specifically, the following describes the creation of an NC program for thread machining.

FIG. 3 is a diagram showing machining paths for threading performed through the machine tool 1 executing an NC program created according to the present embodiment. The vertical axis of FIG. 3 represents the infeed position for thread machining of the machining point of the tool 3a on the X-axis, and the horizontal axis represents the amount of movement of the machining point of the tool 3a (the position of the machining point of the tool 3a) on the Z-axis in terms of the number of revolutions of the spindle for the workpiece.

In the case of existing non-vibration-assisted thread machining, a screw can be machined by performing three passes of linear machining in FIG. 3. Even if one pass of finishing is added, a screw can be machined through four passes of linear machining.

By contrast, as shown in FIG. 3, the drive control unit 22 of the present embodiment controls the relative movement between the workpiece W and the tool 3a based on the NC program, so that seven passes of threading are performed to machine a screw. For example, simply inserting one command code block ("G985 A10. 10.5 K1.0;") into an existing non-vibration-assisted thread machining NC program enables the machine tool to execute machining by performing each of the three passes of linear machining again with vibration introduced thereto. Thus, an existing thread machining NC program can be used without modification. In the case of the machining method disclosed in PTL 1, the use of a program obtained by simply introducing vibration into an existing thread machining NC program poses the risk of a decrease in the quality of the screw due to the load on the tool and the machine tool. Further, it is impossible to create, just by looking at an NC program, a machining program that allows two waves of machining paths to appropriately overlap.

The drive control unit 22 induces vibration in the X-axis direction (the radial direction of the workpiece) while moving the tool holding unit 4 relative to the workpiece at a constant rate in the Z-axis direction (vibration machining) based on the NC program when the first, third, and fifth passes of thread cutting are performed. As a result, each trajectory of the machining point of the tool 3a held by the tool holding unit 4 (the tip trajectory of the tool 3a in FIG. 1) traces a sinusoidal vibration waveform on the XZ plane. The drive control unit 22 moves the tool holding unit 4 relative to the workpiece at a constant rate in the Z-axis direction without inducing vibration in the X-axis direction (the radial direction of the workpiece) (non-vibration machining) based on the NC program when the second, fourth, and sixth passes of thread cutting are performed. In FIG. 3, the second, fourth, and sixth passes of thread cutting are performed by starting the relative movement in the Z-axis direction from the same infeed position as the first, third, and fifth passes of thread cutting, respectively. In this case, a macro for performing six passes of thread cutting by alternating between the vibration machining and the non-vibration machining (linear machining) is programmed using a G-code or an M-code in the NC program, so that the machining paths shown in FIG. 3 are obtained. That is, the drive control unit 22 accurately executes instructions provided by the command codes in the NC program.

On the other hand, the drive control unit 22 only moves the tool holding unit 4 in the Z-axis direction and does not vibrate the tool holding unit 4 when a command code for the seventh (last) pass of thread cutting in the NC program is executed. That is, the command code for the seventh (last) pass of thread cutting in the NC program involves processing to set the value of an address related to the amplitude of the vibration of the tool 3a to 0, to delete the address related to the vibration of the tool 3a, or to ignore the address related to the vibration of the tool 3a. The parameter value in the first controller may be set to 0. Thus, upon a block corresponding to finishing thread machining (may be an NC code only for the X coordinate) being read in the NC program, the first controller is enabled to control the spindle drive unit and the tool feed drive unit so that no relative vibration is induced on the X-axis. In the command code of the NC program for the seventh (last) pass of thread cutting, the address related to the X coordinate for setting the position of the tool holding unit 4 is set to a constant value so that the position of the tool 3a in the X-axis direction is maintained constant. For example, in a case where the X-coordinate position for cutting in the NC program corresponding to the seventh (last) pass of thread cutting is the same as the position of the screw minor diameter, the first controller can control the thread machining so that no vibration is introduced to the movement trajectory of the machining point in the thread machining at this X-coordinate position. As a result, the X-axis position in the trajectory of the machining point of the tool 3a held by the tool holding unit 4 traces a constant straight line pattern on the XZ plane (a trajectory with no vibration in the X-axis direction). This helps prevent the accuracy of the shape of the finished surface from decreasing due to the vibration of the tool 3a. It should be noted that this finishing path with no vibration in the X-axis direction may be performed multiple times instead of being performed only once at the end of the multiple passes of thread cutting. Furthermore, since the vibration machining occurs first and the non-vibration machining occurs afterward in the thread machining according to the present embodiment, there is no need to disable the vibration introduction. For example, in a case where the X-coordinate position of cutting in the NC program is the same as the position of the screw minor diameter, the lower limit of the movement trajectory may be controlled to be the X-coordinate position of the screw minor diameter, as in the fifth pass (vibration) of thread machining with vibration introduced. Furthermore, the finishing path may involve no cutting.

According to the present embodiment, the thread machining program can also be created by inserting a code using the code insertion unit 44 of the programming unit 43 in the second controller 40 of the machine tool. The input screen 35 shown in FIG. 10 is provided to assist in the creation of a thread machining program. Upon an X coordinate of the infeed position for finishing being inputted in an input field 35t for the screw minor diameter and an NC program button being pressed on this screen, a G-code "G985" with numerical values and symbols describing information related to the screw minor diameter is inserted into the machining program. For example, "G985 A10. V72.2 I0.5 K1.0" is inserted. Note here that "G985" is an example of an NC code that defines threading with vibration. If "Enable" is selected in an input field 35c for chip breaking on the input screen 35 for the program creation assistance, an NC code "G985 A10." is outputted. "A10" is an NC code that defines enabling a chip-breaking cycle. "I_" is an NC code that defines a frequency multiplier of the vibration operation, and "K_" is an NC code that defines the amplitude multiplier of the vibration. The amplitude multiplier K may be set to any value. In FIG. 3, K = 1.0. Thus, for example, a code such as "G985 A10. 10.5 K1.0" is inserted into the thread machining program.

The load on the tool and the machine tool increases with an increase in the value of the frequency multiplier I of the vibration operation and an increase in the value of the amplitude multiplier K of the vibration. It is therefore preferable, for example, to set the value of the chip length in the range of 0.5 to 2.5, which is from "NORMAL" (I = 0.5) to "VERY SHORT" (I = 2.5), as displayed on the input screen shown in FIG. 10. The input screen accepts arbitrary value entry. That is, an arbitrary setting such as 1.3 or 1.4 is acceptable. Suppose that, for example, a preset threshold value is 2.5, but an arbitrary numerical value 3.0, which is greater than 2.5, is entered. The first controller reads 3.0, but because the read value is greater than the preset value 2.5, the first controller may change the frequency multiplier of the vibration operation and the amplitude multiplier of the vibration to 2.5 to control the thread machining. The NC program can include an NC code "G985 A10. I0.5 K3.0". In this case, the first controller reads the NC program, but because "K3.0" is greater than 2.5, the first controller may set the amplitude multiplier to 2.5 despite the value 3.0 in the NC program to control the thread machining. This helps keep the load on the tool and the machine tool within a certain range, making it possible to maintain the accuracy of the screw machining. Furthermore, it is preferable to set the input screen to require values to be entered with a decimal point in order to reduce erroneous entries of the frequency multiplier I of the vibration operation and the amplitude multiplier K of the vibration. Furthermore, since the input screen accepts arbitrary entry, which may be sometimes neglected, the frequency multiplier I of the vibration operation or the amplitude multiplier K of the vibration may be left unset. In such cases, the first controller continues to use the previously set frequency multiplier I of the vibration operation or the previously set amplitude multiplier K of the vibration to control the execution of the vibration thread machining.

It should be noted that the machine tool may have a configuration in which the workpiece holding unit moves in the Z-axis direction instead of the configuration in which the tool holding unit 4 moves in the Z-axis direction.

The tool paths of the threading in FIG. 3 will be as follows. On the assumption that X0 is the position of the screw outline (an X coordinate of the thread crest), the depth of cut is X0-X1 (= X1 - X3 = X5 - X3). The position of the screw minor diameter is a screw finishing position (an X coordinate of screw finishing). Since "Standard" (non-vibration) is selected in an input field 35n on the input screen, no vibration is introduced to the threading during relief motion and tool return motion. These settings also help reduce the load on the tool and the machine tool.
a) First pass of threading (first threading)
   (Xa, Za) --> (X1, Za) --> vibration --> (X1, Z1) --> no vibration --> (Xa, Zb) --> (Xa, Za)
b) Second pass of threading (second threading)
   (Xa, Za) --> (X1, Za) --> no vibration --> (X1, Z2) --> no vibration --> (Xa, Zb) --> (Xa, Za)
c) Third pass of threading (third threading)
   (Xa, Za) --> (X3, Za) --> vibration --> (X3, Z3) --> no vibration --> (Xa, Zb) --> (Xa, Za)
d) Fourth pass of threading (fourth threading)
   (Xa, Za) --> (X3, Za) --> no vibration --> (X3, Z4) --> no vibration --> (Xa, Zb) --> (Xa, Za)
e) Fifth pass of threading (fifth threading)
   (Xa, Za) --> (X5, Za) --> vibration --> (X5, Z5) --> no vibration --> (Xa, Zb) --> (Xa, Za)
f) Sixth pass of threading (sixth threading)
   (Xa, Za) --> (X5, Za) --> no vibration --> (X5, Z6) --> no vibration --> (Xa, Zb) --> (Xa, Za)
g) Seventh pass of threading (seventh threading)
   (Xa, Za) --> (X5, Za) --> no vibration --> (X5, Z7) --> no vibration --> (Xa, Zb) --> (Xa, Za)

For the execution of the thread cutting, the NC program is created to allow vibration waveforms (vibration machining) and straight lines (non-vibration machining) traced by the tip of the tool 3a in the XZ plane to be in contact with each other at some points. In FIG. 3, the NC program is created so as to allow each waveform of vibration machining, which represents change in depth of cut of the tool 3a on the X-axis with respect to change in position on the Z-axis, to be in contact with vibration waveforms in the XZ plane of thread cutting executed before and after the vibration machining (preceding and following passes of linear machining).

The following describes an example of such a configuration, using the vibration waveform of the tool tip during execution of the third pass of thread cutting and the straight line representing the movement trajectory of the tool tip during execution of the immediately following thread cutting in the execution sequence, i.e., the fourth pass of thread cutting. It should be noted that the third and fourth passes of thread cutting begin at the same infeed position (X coordinate) in the radial direction of the screw (on the X-axis). For example, the X-coordinate command values for the third and fourth passes of thread cutting in the NC program are the same. Accordingly, instructions may be programmed to treat these two passes of thread machining as one pair. That is, for movement trajectories of two passes of linear machining that begin at the same infeed position, processing may be performed to introduce vibration to one of the two passes of linear machining and to introduce no vibration to the other pass of linear machining. Troughs of the vibration waveform obtained during the third pass of thread cutting and the straight line representing the linear machining during the fourth pass of thread cutting are in contact with each other. The vibration waveform shown is a triangular waveform, but may alternatively be an arc-shaped or undulating waveform. The vibration waveforms representing the first, third, and fifth passes are in phase. That is, the phase difference between the waveforms in FIG. 3 is 0°. The phase difference is not limited as such, and there may be a phase difference between the vibration waveforms. For example, the phase difference may be 180°, or may be set in the range of 90° to 270°, for example. Furthermore, the waveforms representing the first and second passes have the same period, but do not need to have the same period. The machine tool produces the chip breaking effect as long as there is at least one point where the two movement trajectories of the tool 3a in the vibration machining and the linear machining (non-vibration machining) are in contact with each other. In PTL 1, an air-cut movement path is provided where the tool does not perform cutting at all. However, providing an air-cut movement path where the tool does not perform cutting results in acceleration of the movement of the tool due to the lack of cutting. The thus accelerated tool then comes back into contact with the workpiece with a greater impact. This is considered a factor that promotes tool wear. It is therefore more preferable to create an NC program that sets movement paths of the tool tip so as to provide points or lines of contact sufficient to break up chips.

As a result of the NC program being created in this way, the tool 3a performing thread cutting has no workpiece to cut in the current pass of thread cutting at the points, although they are mere points, of contact with the preceding pass of thread cutting. At each point, the action of cutting the workpiece with the tool 3a comes to an end, and a chip that has been cut off up to the end point is produced. This can be considered as chip breaking that yields shorter chips compared to conventional chips. In other words, the workpiece has non-machining points where the tool 3a does not perform cutting. At the non-machining points, the machining point (cutting edge) of the tool 3a makes contact with the workpiece but fails to perform cutting, resulting in chip breaking.

The first controller reads the machining program including a command code corresponding to a first infeed position (for example, the position of the first and second passes of machining in FIG. 3) and obtains information on the first infeed position. Upon determining that the first infeed position is located (i) further toward the position of the screw minor diameter than the position of the screw outline, and (ii) at the same position as the position of the screw minor diameter or further toward the position of the screw outline than the position of the screw minor diameter, the first controller executes first thread machining (the first pass of machining in FIG. 3) to cut the workpiece along the rotational axis of the workpiece while vibrating the tool relative to the workpiece along an axis different from the rotational axis. Upon determining that the first infeed position is located (i) further toward the position of the screw minor diameter than the position of the screw outline, and (ii) further toward the rotational axis than the position of the screw minor diameter, the first controller does not execute vibration machining involving vibration introduction and executes linear machining.

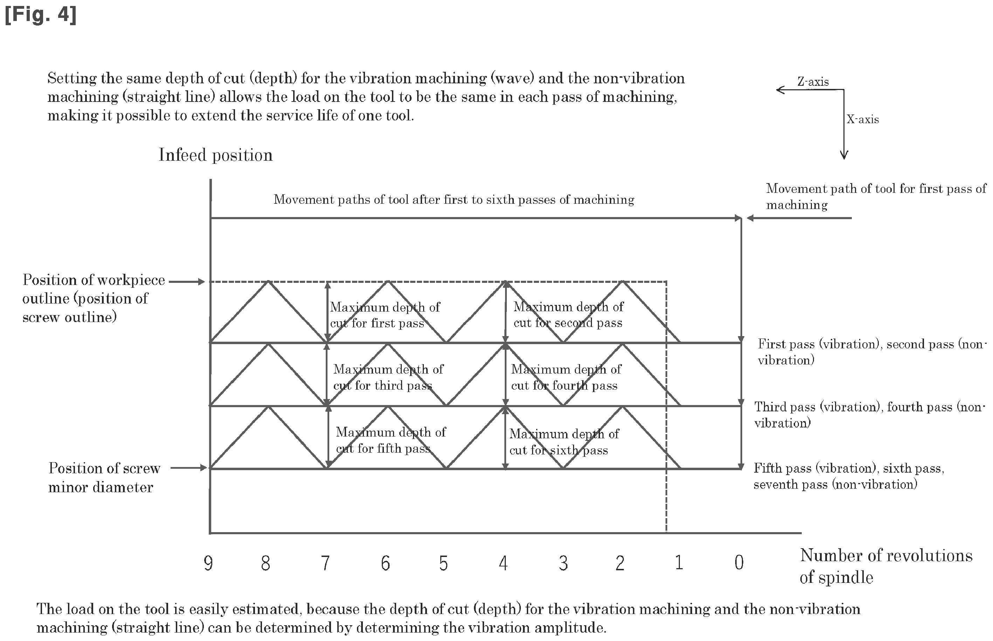

As shown in FIG. 4, the load on the tool can be equalized by keeping the maximum depth of cut at the same level for each pass of machining. As can be seen from FIG. 4, setting the same depth of cut (depth) for the vibration machining (wave) and the non-vibration machining (straight line) allows the load on the tool to be the same in each pass of machining, making it possible to extend the service life of one tool. This reduces the number of tool replacements, and thus reduces a period of time in which tool replacements halt the thread machining. As a result, machining efficiency increases.

Furthermore, in the machining shown in FIG. 4, it is possible to adjust the maximum depth of cut by simply adjusting the amplitude, making it easier to predict tool wear, and to predict when and how often tool replacements are likely to occur. As a result, setup efficiency increases.

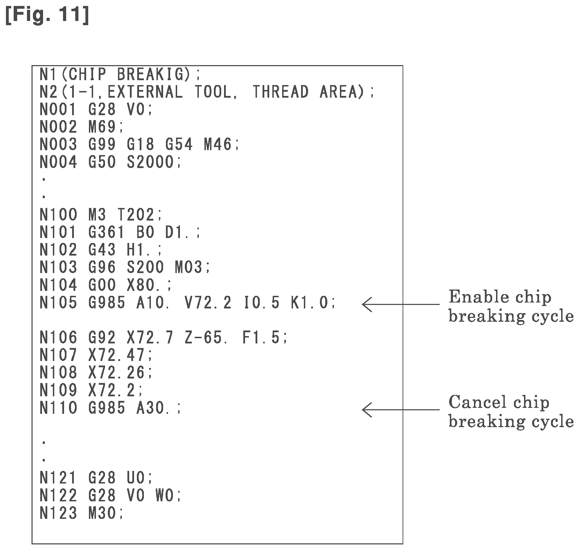

Furthermore, an existing machining program for thread machining can be used without modification, and it is easy to edit the existing machining program into a machining program for the machining of the present embodiment. FIG. 11 is a diagram showing an example of the NC program of the present embodiment. The NC program includes three thread cutting path X coordinates, namely, N107 (X72.47), N108 (X72.26), and N109 (X72.2). In the case of threading shown in FIG. 4, the command N107 (X72.47) is for the second pass, the command N108 (X72.26) is for the fourth pass, and the command N109 (X72.2) is for the sixth pass. These three passes are threading strokes to cut the workpiece, and with an existing thread machining program, a screw can be machined by executing these three blocks. In the present embodiment, the vibration-assisted thread machining is enabled by simply inserting a start command "G985 A10. V72.2 10.5 K1.0;" and an end command "G985 A30.;" into the existing thread machining program. As shown in FIG. 11, by sandwiching a cutting command between the start command and the end command, one threading stroke is divided into two as shown in FIG. 4. Thus, machining with vibration introduced (first stroke) is executed first, and normal machining with no vibration introduced (second stroke) is executed afterward in the block with the X coordinate (X 72.47).

As long as an NC program including a vibration-related code can be created as described above, there is no need to provide a separate high-pressure coolant device to break up chips like before. Furthermore, the load on the tool during conventional vibration screw machining can be reduced, allowing the tool to be used for a longer period of time than before and reducing the frequency of tool replacements. This leads to a reduction in tool costs. Furthermore, since the time to be spent on tool replacements is reduced, more time can be allocated to the execution of screw machining using the machine tool than before.

The NC program can include, for example, an NC code "G985 A10. V72.21 10.5 K1.0;" if an incorrect value is entered for the screw minor diameter. The NC program includes the command N109 (X72.2), which is an X coordinate close to the rotational axis. In this case, the first controller can control the thread machining so that linear machining with no vibration introduced is performed at the coordinate of the command N109 (X72.2).

Furthermore, in the case of threading shown in FIG. 12, there are two peaks and three troughs in a vibration waveform during one revolution of the spindle for the workpiece, that is, vibration is induced at high speed. Performing the threading shown in FIG. 12 using a conventional machine tool therefore causes vibration of the machine tool itself, resulting in a reduction in screw machining quality. Accordingly, in order to perform the threading shown in FIG. 12, the conventional machine tool needs to be reinforced to have a structure that is resistant to vibration. Otherwise, it is necessary to take measures such as attaching a vibration mechanism with a counter-vibration function to the machine tool.

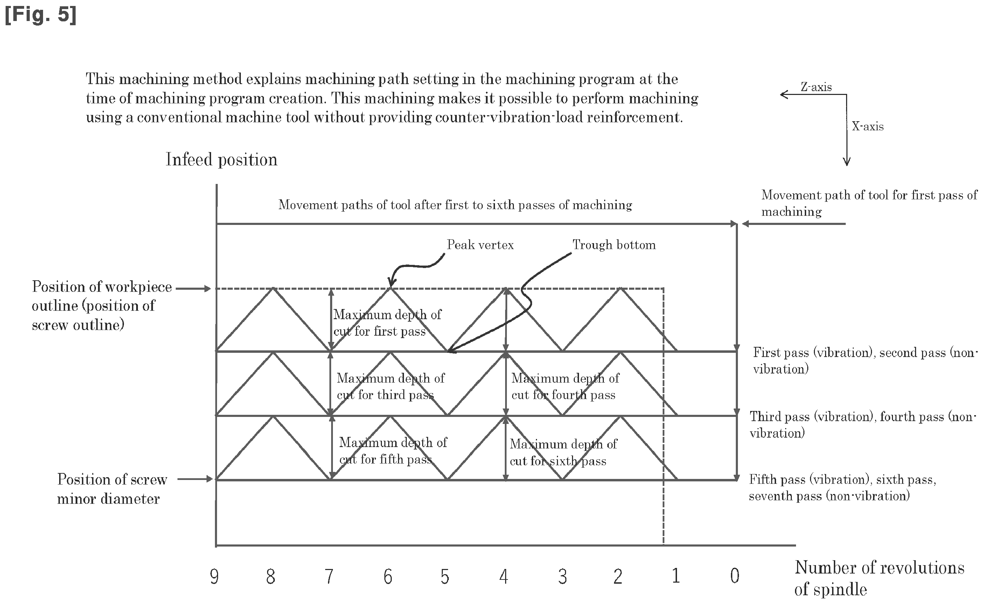

Screw machining shown in FIG. 5 is set so that a vibration waveform has two peaks and three troughs during four revolutions of the spindle for the workpiece. Vibration in this case is slower than that in the case of the thread machining shown in FIG. 12, making it possible to prevent the vibration from being transmitted to the machine tool itself. Thus, it is possible to perform the machining by creating an NC program for the threading shown in FIG. 5 and executing the NC program using a conventional machine tool as is without reinforcing the machine tool or taking other measures. The configuration shown in FIG. 5 is one alternative among others. The effect of the vibration can be reduced compared to the machining shown in FIG. 12 as long as there is no more than one peak vertex or no more than one trough bottom in the waveform during one revolution of the spindle for the workpiece. The vibration waveform is not limited to being a triangular waveform, but may alternatively be an arc-shaped waveform or what is called a undulating waveform.

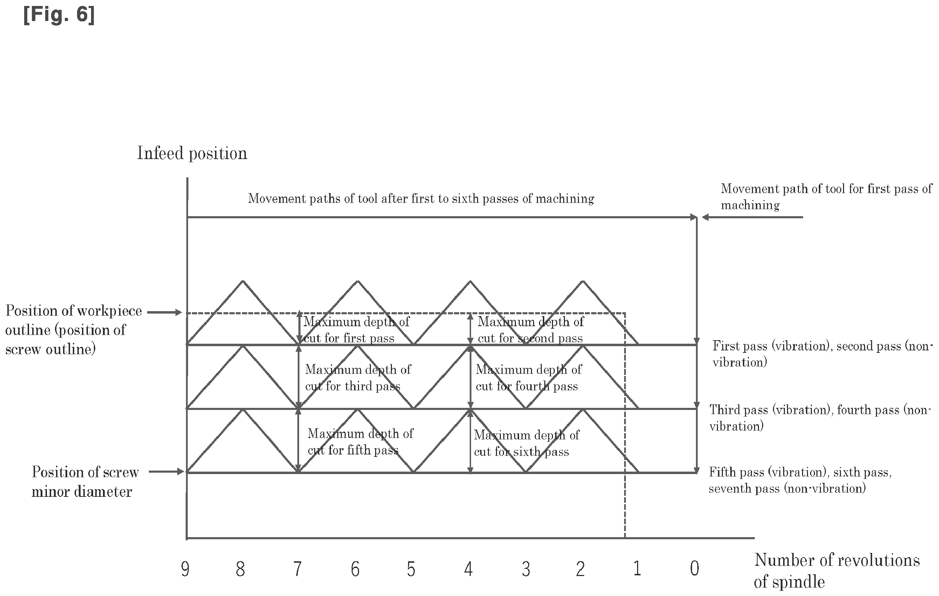

In FIG. 6, the peak vertex of the amplitude of the first pass, which is vibration machining, is located above the outline of the workpiece. Thus, it is possible to design the thread machining so that the maximum depth of cut for the first pass, which is vibration machining, is smaller than the maximum depth of cut for the third to sixth passes of machining. The maximum depth of cut for the second pass, which is non-vibration machining (linear machining), is the same as the maximum depth of cut for the first pass, which is vibration machining.

In this way, the maximum depth of cut for the first and second passes can be smaller.

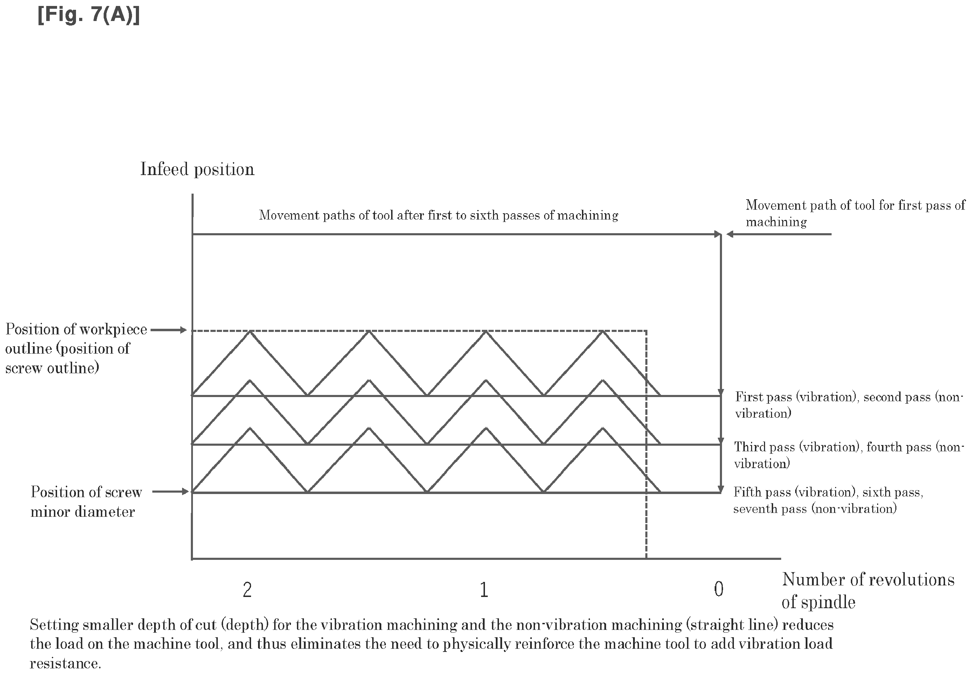

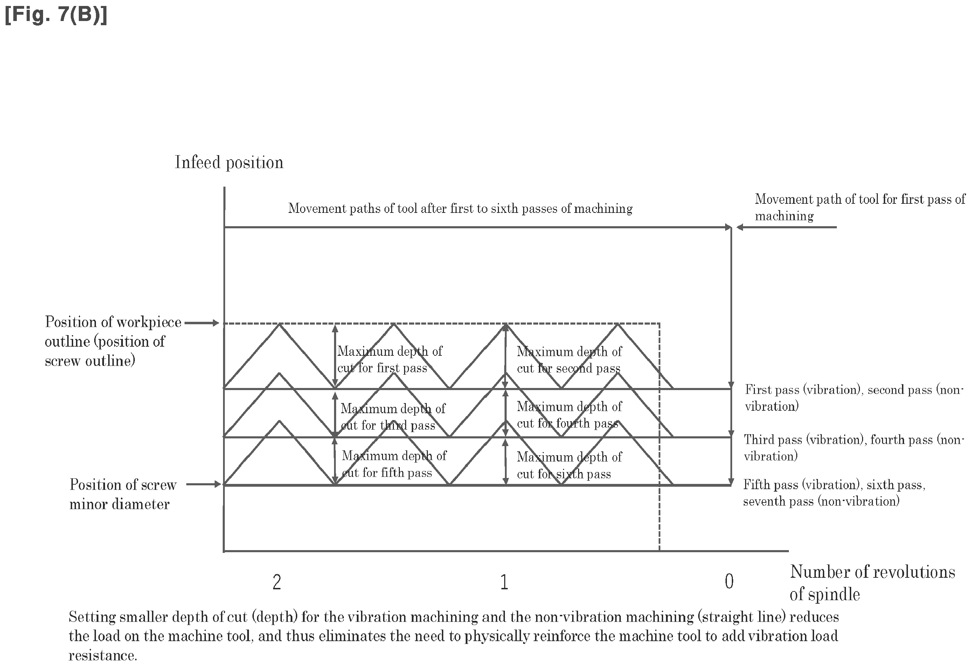

In the case of machining paths shown in FIG. 7, the peak vertices of the movement trajectory of the tool obtained in the third pass, which is vibration machining, are located above the movement trajectory of the tool obtained in the second pass, which is linear machining. In this way, the maximum depth of cut for the third and fourth passes of machining can be smaller than the maximum depth of cut for the first pass of machining, achieving a reduction in the load on the tool.

It is possible to design the thread machining so that the maximum depth of cut is the same in each of the first to sixth passes, by combining the concept of the machining paths illustrated in FIG. 6 with the concept of the machining illustrated in FIG. 7. It is also possible to design the thread machining so that the difference between the maximum depth of cut for the first and second passes and the maximum depth of cut for the fourth to sixth passes is small.

It is therefore preferable to provide a function of adjusting the distance between the peak vertices and the straight line on an operation screen. With a function of calculating based on tool wear when a tool replacement is likely to occur, and displaying, for the operator setting up the screw machining, the maximum depth of cut and when a tool replacement is likely to occur, the operator can operate the machine tool intuitively. This function may be implemented by measuring, in advance, the degree of tool wear, which varies depending on material properties, maximum depth of cut, and cutting time, and storing the measurements as data.

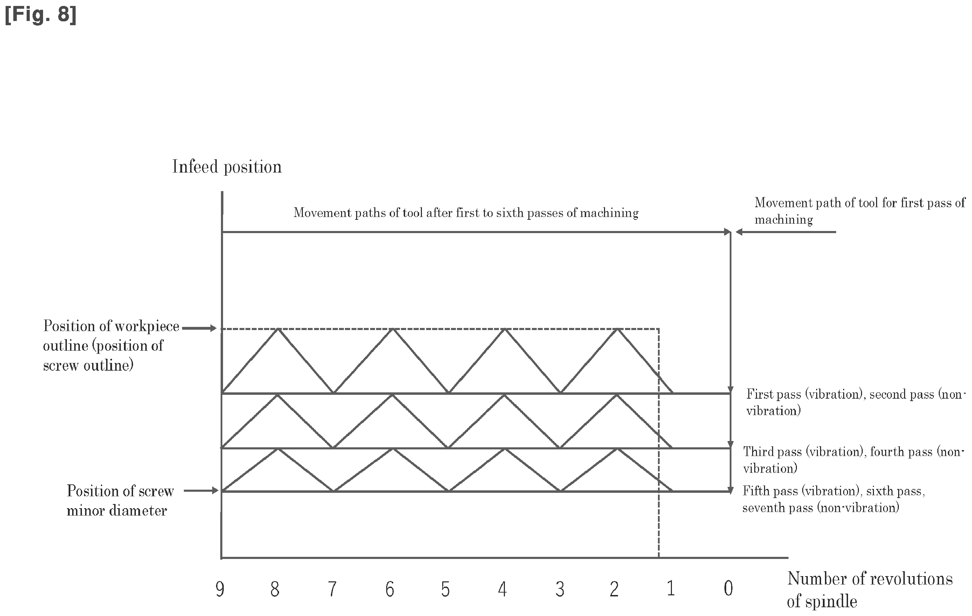

Among NC programs that include vibration-related codes, a thread machining NC program preferably further includes a command code for reducing the amplitude of the vibration of the tool holding unit 4 in the X-axis direction as the order in the execution sequence of multiple passes of thread cutting increases. The vibration amplitude of the vibration waveform of the tool tip is gradually reduced. In the case of thread machining shown in FIG. 8, as can be seen, the value of the amplitude satisfies the relationship A₁ > A₃ > A₅, where A₁, A₃, and As are the amplitudes of the tool tip during the first, third, and fifth passes of thread cutting.

In this configuration, the amplitude of the vibration of the tool 3a decreases as the order in the execution sequence of the passes of thread cutting increases (as the thread cutting progresses from a rough machining step toward a finishing step). This configuration sets the amplitude of the vibration of the tool 3a to a smaller level in the finishing step where high shape accuracy is required, allowing for an improvement in the accuracy of the threading using the tool 3a.

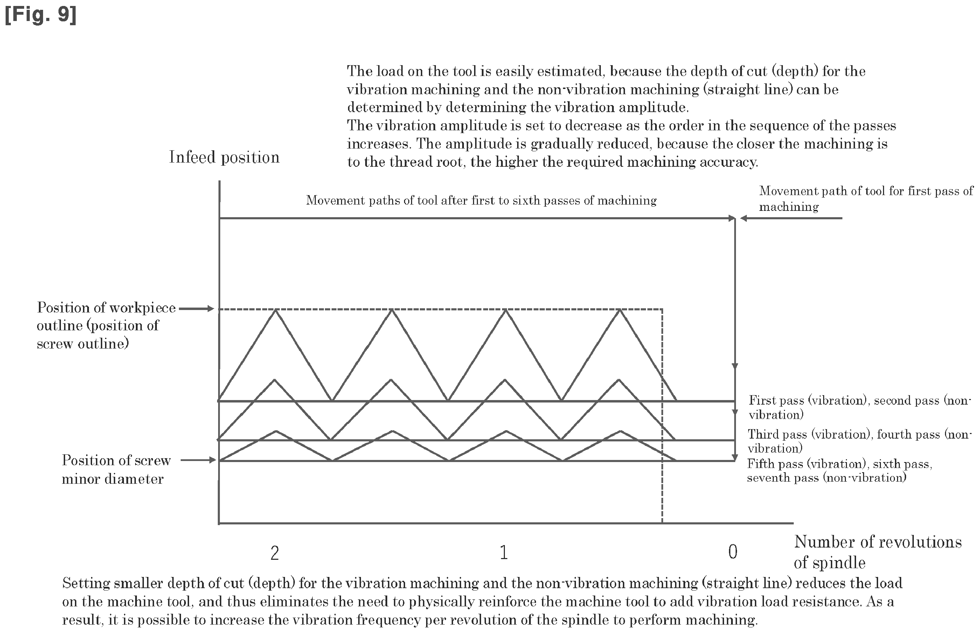

FIG. 9 shows machining paths in the case of a combination of the concept illustrated in FIG. 8 and the concept illustrated in FIG. 7. Depending on the type of screw, cutting may be performed along machining paths such as shown in FIG. 9.

As the fourth pass of thread machining in FIG. 9, non-vibration machining is performed with respect to a command indicating a first infeed position (for example, X72.26). Subsequently, as the fifth pass of thread machining, vibration machining is performed with respect to a command indicating a second infeed position (for example, X72.2), which is deeper than that for the fourth pass. Vibration is induced in a direction for a shallower cut with the second infeed position as the deepest. Consequently, the machining path of the fifth pass of threading is like a triangular wave with a series of peaks. The vertices of the wave are located at shallower thread cutting positions (for example, X72.28) than the first infeed position (for example, X72.26). There is no workpiece at the positions above the first infeed position, and thus chip breaking occurs at these positions. On the other hand, the deepest point of the machining path wave representing the fifth pass of threading is set to the second infeed position (for example, X72.2). This is because cutting deeper than the second infeed position results in different screw surface quality. Subsequently, the sixth pass of thread machining is performed without introducing vibration with respect to the command indicating the second infeed position (for example, X72.2). Shorter chips are produced because the machining paths overlap at points in the machining program. Some chips may remain unbroken due to some error that can occur depending on the performance of the machine tool. However, even such chips are fairly thin, and therefore break on their own or otherwise get broken up.

Through the configurations described above, it is possible to provide, for example, a machine tool described below. Needless to say, it is also possible to provide a machine tool control method, a machine tool control device, a device for editing a machining program for thread machining, a method for editing a machining program for thread machining, and a screw machining method.
(1) Machine tool A A machine tool including:
   a tool holding unit that holds a tool;
   a workpiece holding unit that holds a workpiece; and
   a drive control unit that drives and controls the tool holding unit and the workpiece holding unit so as to perform the following as screw machining: (i) first thread machining that begins at a first infeed position on an axis orthogonal to a rotational axis of the workpiece and advances along
   the rotational axis of the workpiece to cut the workpiece along the rotational axis while vibrating the tool relative to the workpiece along an axis different from the rotational axis; and (ii) second thread machining that begins at the first infeed position and advances along the rotational axis of the workpiece to linearly cut the workpiece along the rotational axis.

   (1) Machine tool control device A A device for controlling a machine tool including a tool holding unit that holds a tool and a workpiece holding unit that holds a workpiece, wherein the device controls the following as screw machining:
      (i) first thread machining that begins at a first infeed position on an axis orthogonal to a rotational axis of the workpiece and advances along the rotational axis of the workpiece to cut the workpiece along the rotational axis while vibrating the tool relative to the workpiece along an axis different from the rotational axis; and (ii) second thread machining that begins at the first infeed position and advances along the rotational axis of the workpiece to linearly cut the workpiece along the rotational axis.
   (2) Machine tool B A machine tool including:
      a tool holding unit that holds a tool;
      a workpiece holding unit that holds a workpiece; and
      a controller that drives and controls the tool holding unit and the workpiece holding unit so as to perform the following: (i) first thread machining that begins at a first infeed position on an axis orthogonal to a rotational axis of the workpiece and advances along the rotational axis of the workpiece to cut the workpiece while vibrating the tool relative to the workpiece along an axis different from the rotational axis; and (ii) second thread machining that begins at a second infeed position on the axis orthogonal to the rotational axis of the workpiece and advances along the rotational axis of the workpiece to linearly cut the workpiece, wherein the controller reads a machining program including a command code corresponding to the first infeed position and executes the first thread machining if the first infeed position read from the machining program is located (i) further toward a position of a screw minor diameter than a position of an screw outline, and (ii) at the same position as the position of the screw minor diameter or further toward the position of the screw outline than the position of the screw minor diameter.
   (3) Machine tool C A machine tool including:
      a tool holding unit that holds a tool;
      a workpiece holding unit that holds a workpiece; and
      a controller that drives and controls the tool holding unit and the workpiece holding unit so as to perform the following: (i) first thread machining that begins at a first infeed position on an axis orthogonal to a rotational axis of the workpiece and advances along the rotational axis of the workpiece to cut the workpiece while vibrating the tool relative to the workpiece along an axis different from the rotational axis; and (ii) second thread machining that begins at a second infeed position on the axis orthogonal to the rotational axis of the workpiece and advances along the rotational axis of the workpiece to linearly cut the workpiece, wherein the controller reads a machining program including an amplitude multiplier K and executes the first thread machining by changing the amplitude multiplier K to a predetermined value if the amplitude multiplier K read from the machining program is greater than the predetermined value.
   (4) Machine tool D A machine tool including:
      a tool holding unit that holds a tool;
      a workpiece holding unit that holds a workpiece; and
      a controller that drives and controls the tool holding unit and the workpiece holding unit so as to perform the following: (i) first thread machining that begins at a first infeed position on an axis orthogonal to a rotational axis of the workpiece and advances along the rotational axis of the workpiece to cut the workpiece while vibrating the tool relative to the workpiece along an axis different from the rotational axis; and (ii) second thread machining that begins at a second infeed position on the axis orthogonal to the rotational axis of the workpiece and advances along the rotational axis of the workpiece to linearly cut the workpiece, wherein if an amplitude multiplier K of the vibration is not set, the controller executes the first thread machining using a previously set value of the amplitude multiplier K.
   (5) Machine tool E A machine tool including:
      a tool holding unit that holds a tool;
      a workpiece holding unit that holds a workpiece; and
      a controller that drives and controls the tool holding unit and the workpiece holding unit so as to perform the following: (i) first thread machining that begins at a first infeed position on an axis orthogonal to a rotational axis of the workpiece and advances along the rotational axis of the workpiece to cut the workpiece while vibrating the tool relative to the workpiece along an axis different from the rotational axis; and (ii) second thread machining that begins at a second infeed position on the axis orthogonal to the rotational axis of the workpiece to linearly cut the workpiece along the rotational axis of the workpiece, wherein if a frequency multiplier I of the vibration operation is not set, the controller executes the first thread machining using a previously set value of the frequency multiplier I.
   (6) Machine tool F A machine tool including:
      a tool holding unit that holds a tool;
      a workpiece holding unit that holds a workpiece; and
      a controller that drives and controls the tool holding unit and the workpiece holding unit so as to perform the following: (i) first thread machining that begins at a first infeed position on an axis orthogonal to a rotational axis of the workpiece, and involves (i-1) moving the tool relative to the workpiece by a first distance along the rotational axis of the workpiece, and (i-2) cutting the workpiece by vibrating the tool relative to the workpiece along an axis different from the rotational axis while subsequently moving the tool relative to the workpiece along the rotational axis after moving the tool by the first distance; and (ii) second thread machining that involves (ii-1) moving the tool relative to the workpiece by the first distance along the rotational axis of the workpiece from a second infeed position on the axis orthogonal to the rotational axis of the workpiece, and subsequently (ii-2) linearly cutting the workpiece along the rotational axis after moving the tool by the first distance.

### Reference Signs List

- W: workpiece
- 1: machine tool
- 2: spindle (workpiece holding unit)
- 3a: threading tool (tool)
- 4: tool holding unit
- 10: tool feed drive unit (feed drive unit)
- 11: spindle drive unit (rotational drive unit)
- 23: drive control unit (threading control unit)

## Claims

1. A machine tool comprising:
a tool holding unit that holds a tool;
a workpiece holding unit that holds a workpiece; and
a drive control unit that drives and controls the tool holding unit and the workpiece holding unit so as to perform: (i) first thread machining that advances along a rotational axis of the workpiece from a first infeed position on an axis orthogonal to the rotational axis of the workpiece to perform cutting along the rotational axis of the workpiece and that cuts the workpiece while vibrating the tool relatively on an axis different from the rotational axis of the workpiece; and (ii) second thread machining that advances along the rotational axis of the workpiece from the first infeed position to cut the workpiece linearly along the rotational axis of the workpiece.
